# EUROPEAN PATENT SPECIFICATION

(11) **EP 3 423 518 B1**
(45) Date of publication and mention of the grant of the patent: **25.03.2020**
(21) Application number: 17708048.8
(22) Date of filing: 15.02.2017
(51) Int. Cl.: C08J 7/04

(54) **POLYMER FILMS AND DETERGENT PACKETS CONTAINING THEM**
POLYMERFOLIEN SOWIE DIESE ENTHALTENDE WASCHMITTELPACKUNGEN
FILMS POLYMÈRES ET EMBALLAGES DE DÉTERGENT LES CONTENANT

(30) Priority: 01.03.2016 US 201662301659 P
(43) Date of publication of application: 09.01.2019
(73) Proprietor: Dow Global Technologies LLC, Midland, MI 48674 (US); Rohm and Haas Company, Philadelphia, PA 19106 (US)
(72) Inventor: JIN, Xin, Midland, MI 48674 (US); SONNENSCHEIN, Mark F., Midland, MI 48674 (US); KARIKARI, Afua Sarpong, Collegeville, PA 19426 (US)
(74) Representative: Houghton, Mark Phillip
(86) International application number: PCT/US2017/017859
(87) International publication number: WO 2017/151313

(56) References cited:
- WO-A1-02/16222
- WO-A1-2016/160449
- US-A- 5 429 874

## Description

### Field

This invention relates generally to water dispersible polymer films. More specifically, the invention relates to polymer films that are useful as encasing materials for detergent packets.

### Background

Polyvinyl alcohol (PVOH) films are commonly used as encasing materials for unit dose detergent packets, such as those used in laundry care. The PVOH films can provide acceptable water solubility, good mechanical strength, toughness, and impact resistance. However, it is known that PVOH films are not resistant to detergent formulations that contain relatively high amount of water, e.g., 20 wt % or more. When used for such formulations, the PVOH films may deteriorate, lose their mechanical integrity, or prematurely dissolve. In addition, water solubility of PVOH films may actually decrease upon long-term exposure to the high water content detergents contained in the detergent packet. Consequently, the PVOH film does not fully dissolve or disperse when the packet is used.

The performance issues with PVOH films limit their useability with high water content detergents and their long term storage capability. Alternative water dispersible films are therefore desired in the industry, particularly films that are useable as encasing materials for relatively high water content (e.g., 20 weight percent or more) detergent formulations, or that provide long term storage stability without detriment to their water dispersibility. US5429874 relates to a coextruded water soluble multilayer film suitable for packaging caustic materials comprising: a) an outer layer comprising a material selected from the group consisting of fully hydrolyzed polyvinyl alcohol, partially hydrolyzed polyvinyl alcohol, and polyethylene oxide; b) an intermediate layer comprising a material selected from the group consisting of fully hydrolyzed polyvinyl alcohol, partially hydrolyzed polyvinyl alcohol, and polyethylene oxide; and c) an inner layer comprising a material selected from the group consisting of partially metal salt neutralized acid/acrylate copolymer, and a blend of acid/acrylate copolymer and ionomer.

### Statement of Invention

We have now found that films exhibiting highly desirable properties may be prepared by coating a PVOH substrate with a barrier layer as described herein. Advantageously, the resultant films exhibit improved resistance to high water content detergent formulations (e.g., containing 20 to 50 weight percent water). The films also demonstrate favorable storage stability and favorable water dispersibility following such storage. The films, therefore, are useful as encasing materials for unit dose detergent packets, including those that contain high water content detergent formulations.

Accordingly, in one aspect, there is provided a water dispersible polymer film comprising: a polyvinyl alcohol substrate; and a barrier layer coated on at least one surface of the substrate, each barrier layer independently comprising a mixture of
(a) a first copolymer that is an at least partially neutralized maleic anhydride-C₂-C₈ olefin copolymer or its maleic acid counterpart; and
(b) a second copolymer that is an at least partially neutralized ethylene (meth)acrylic acid copolymer, wherein the first copolymer is an at least partially neutralized maleic acid-isobutylene copolymer and further wherein the weight ratio of the first copolymer to the second copolymer is from 10:1 to 1:4.

In another aspect, the invention provides a detergent packet comprising a detergent formulation encased in a water dispersible polymer film as described herein.

### Detailed Description

Unless otherwise indicated, numeric ranges, for instance as in "from 2 to 10," are inclusive of the numbers defining the range (e.g., 2 and 10). Unless otherwise indicated, ratios, percentages, parts, and the like are by weight. As used herein, unless otherwise indicated, the phrase "molecular weight" or "Mw" refers to the weight average molecular weight as measured in a conventional manner with gel permeation chromatography (GPC). GPC techniques are discussed in detail in Modem Size Exclusion Chromatography, W. W. Yau, J. J. Kirkland, D. D. Bly; Wiley-lnterscience, 1979, and in A Guide to Materials Characterization and Chemical Analysis, J. P. Sibilia; VCH, 1988, p.81-84. Molecular weights are reported herein in units of Daltons. As used herein the term "(meth)acrylic" refers to acrylic or methacrylic and "(meth)acrylate" refers to either acrylate or methacrylate. Weight percentages (or wt %) in the composition are percentages of dry or actives weight, i.e., excluding any water that may be present in the composition. Percentages of monomer units in a polymer are percentages of solids or neat monomer weight, i.e., excluding any water present in a polymer emulsion, and are based on the total weight of the polymer (determined from the total weight of the monomers from which the polymer is comprised).

As indicated above, the invention relates to a water dispersible polymer film according to claim 1.

The polyvinyl alcohol (PVOH) substrate for use in the invention is a hygroscopic, water dispersible material that is suitable for use in detergent packaging (e.g., unit dose laundry detergents). Preferably, the PVOH has a degree of hydrolysis of greater than 88%, more preferably at least 92% and more preferably 98% or less, for example in a range of about 92% to about 98%. The molecular weight of the PVOH is not particularly limited, but a medium molecular weight PVOH having a 4% aqueous solution viscosity of about 20 cps to about 30 cps (e.g., 28 cps) at 20 °C is preferred for processability and strength of the resulting film. The PVOH is preferably present in a range of about 50 % by weight, based on the total weight of the substrate to about 90 wt %, on a dry basis, for example about 60 wt % to about 80 wt %, or about 70 wt %. Suitable PVOH films are commercially available, for instance, from MonoSol (e.g., the product MONOSOL M8630).

In some embodiments, the PVOH substrate has a thickness ranging from 25 to 500 microns, preferably from 50 to 100 microns.

In the invention, one or more surfaces of the PVOH substrate is coated with a barrier layer. The barrier layer, independently on each surface, comprises (a) a first copolymer that is an at least partially neutralized maleic anhydride-C₂-C₈ olefin copolymer or its maleic acid counterpart; and (b) a second copolymer that is an at least partially neutralized ethylene (meth)acrylic acid copolymer, wherein the first copolymer is an at least partially neutralized maleic acid-isobutylene copolymer, and further wherein the weight ratio of the first copolymer to the second copolymer is from 10:1 to 1:4.

The first copolymer is generally the reaction product of an olefin and either maleic anhydride or maleic acid. The resultant copolymer may be readily hydrolyzed, neutralized, or both. The olefin is isobutylene. Preferably, the first copolymer contains (based on the weights of monomer reactants) from 10 to 90 weight percent of maleic anhydride or maleic acid and from 90 to 10 weight percent of the olefin component.

In some embodiments, the first copolymer has a molecular weight ranging from 1,000 to 1,000,000, preferably from 10,000 to 500,000.

Suitable first copolymers for use in the invention are commercially available, or they may readily be prepared using literature methods. For instance, the copolymers may be prepared by radical, suspension or emulsion polymerization techniques.

The second component of the barrier layer is an ethylene (meth)acrylic acid copolymer, preferably ethylene acrylic acid (EAA) copolymer. Ethylene (meth)acrylic acid copolymers are well known and are found in a wide variety of applications including high-performance adhesives, flexible packaging films, and pouches and in extrusion coating and extrusion lamination applications. Preferably, the second copolymer contains (based on weights of monomer reactants) from 50 to 95 weight percent of ethylene and from 5 to 50 weight percent of (meth)acrylic acid.

In some embodiments, the weight ratio of the ethylene to (meth)acrylic acid in the copolymer may be between about 50:50 and about 90:10, preferably between about 70:30 and about 90:10, and more preferably between about 75:25 and about 80:20.

The barrier layer comprises a mixture of the first copolymer and the second copolymer, and the solids weight ratio of the first copolymer to second copolymer ranges from 10:1 to 1:4, alternatively 3:1 to 1:3, or alternatively 3:1 to 2:1.

The first and second copolymers are at least partially neutralized. Thus, at least a portion of the carboxylic acid groups in the first polymer (if maleic anhydride is present, then following hydrolysis) and in the second copolymer may be at least partially neutralized with a base, resulting in a salt. Various bases may be used including, for instance, amines, alkali or alkaline earth metal hydroxides, or ammonium hydroxide. Suitable amine neutralizers include, for example, 2 amino-2-methyl-1,3-propanediol, 2-amino-2-methyl-1-propanol, N,N-dimethyl-2-amino-2-methyl-1-propanol, mono-isopropanolamine, triisopropanolamine, ethanolamine, triethanolamine and morpholine. Suitable alkali or alkaline earth metal hydroxides include, for example, sodium hydroxide and potassium hydroxide. Preferably, the neutralizer is selected from potassium hydroxide, sodium hydroxide, or mixtures thereof.

The degree of neutralization in the first copolymer may range from 0.5 to 100 percent. Preferably, the degree of neutralization in the first copolymer is at least 3 percent, alternatively at least 5 percent; up to 100 percent, alternatively up to 95 percent, or alternatively up to 85 percent. The degree of neutralization in the second copolymer may range from 20 to 100 percent. Preferably, the degree of neutralization in the second copolymer is at least 50 percent, alternatively at least 75 percent. Those skilled in the art will recognize appropriate methods for determining degrees of neutralization. *See*, *e.g*., United States Patent No. 3,472,825.

Neutralization may be carried out after the copolymers are mixed. Alternatively, it may be preferable to mix partially or fully neutralized aqueous dispersions of the copolymers.

The barrier layer may be coated on or more surfaces of the PVOH substrate, using known coating techniques, such as, for instance, blade, web, spray, knife, rod, kiss, slot, painting, printing and mixtures thereof. It is also possible to deposit the barrier layer on the substrate via solvent-free powder coating processes. The barrier layer may be coated on more than one surface of the substrate. In some embodiments, the barrier layer is coated only on the surface of the substrate that would form the inside surface when used in a unit dose detergent packet, i.e., coated on the surface that is in direct contact with the detergent formulation.

In some embodiments, the thickness of the barrier layer on the substrate, when dry, ranges from 0.5 to 25 microns, preferably from 1 to 10 microns.

The barrier layer and/or the substrate of which the water dispersible polymer film of the invention is comprised may contain one or more optional ingredients including, but not limited to, plasticizers, tackifiers, fillers, or coalescents.

In another aspect, the invention provides a detergent packet. The packet, such as a unit dose packet, utilizes the water dispersible films described above as an encasing material for a detergent formulation.

The detergent formulation of the packet typically contains surfactants, and various other additives, including, for instance, one or more solvents (e.g., water, glycerol, propylene glycol), builders, salts, and the like.

In a preferred embodiment, the detergent packet comprises: (a) a detergent formulation comprising surfactants; and up to 50 weight percent water; and (b) a package encasing the detergent formulation, wherein the package comprises a water dispersible film as described above.

In some embodiments, the detergent formulation comprises at least 15 wt % surfactants, preferably at least 17 wt %, preferably at least 20 wt %, preferably at least 23 wt %, preferably at least 26 wt %. In some embodiments, the detergent formulation comprises up to 50 wt % water, alternatively up to 40 wt % water, alternatively up to 30 wt % water, or alternatively up to 25 wt % water. In some embodiments, the detergent formulation contains at least 20 wt % water. In some embodiments, the detergent formulation contains 21 wt % water. The balance of the detergent formulation may be, for instance, additional surfactants, non-aqueous solvents, salts, builders, and the like.

The surfactant(s) may be cationic, anionic, nonionic, fatty acid metal salt, zwitterionic or betaine surfactants. Preferably, the detergent formulation comprises at least one anionic surfactant, preferably at least two. Preferably, nonionic surfactants have an alkyl group having at least eight carbon atoms and at least five polymerized ethylene oxide or propylene oxide residues. Preferably, nonionic surfactants have at least five polymerized ethylene oxide residues, preferably at least six, preferably at least seven; preferably no more than twelve, preferably no more than eleven, preferably no more than ten. Preferably, a linear alcohol ethoxylate has a C₈-C₁₈ alkyl group, preferably C₁₀-C₁₆, preferably C₁₂-C₁₅. Preferably, a linear alcohol ethoxylate contains from six to twelve polymerized units of ethylene oxide, preferably from seven to ten. Preferably, anionic surfactants have an alkyl group having at least ten carbon atoms and an anionic group. Anionic surfactants also may have polymerized residues of ethylene oxide, and/or may have aromatic rings.

Preferably, the pH of the detergent formulation is from 4.5 to 11, more preferably from 7 to 10. Suitable bases to adjust the pH of the formulation include mineral bases such as sodium hydroxide and potassium hydroxide; ammonium hydroxide; and organic bases such as mono-, di- or tri-ethanolamine; or 2-dimethylamino-2-methyl-1-propanol (DMAMP). Mixtures of bases may be used.

As indicated above, the water dispersible film of the detergent packet exhibits improved resistance to high water content (e.g., containing 20 weight percent or more water) detergent formulations, favorable storage stability, and favorable water dispersibility following such storage.

In use, the detergent contents of the packet may be released by exposing the packet to excess water, for instance as may be encountered during the wash cycle of a laundry machine. Following such exposure, the water dispersible film will readily disintegrate, releasing the detergent formulation into the surroundings.

Some embodiments of the invention will now be described in detail in the following Examples.

### EXAMPLES

### Example 1

### Preparation of maleic anhydride-isobutylene copolymer with various neutralization levels

Weighed 40 grams of a maleic anhydride-isobutylene copolymer commercially available from The Dow Chemical Company, and 122.7 grams of deionized water in a 250 ml 3-neck round flask with a condenser and a mechanical agitation. HCl solution (10 grams, 37.4 wt%) and NaOH solution (3.8 grams, 50 wt%) were added to the mixture with agitation. The mixture was agitated at moderate speed at 95 °C overnight. A viscous solution was obtained. It is an 83.8 % neutralized solution and contains about 20 wt % solid. It is ready for the coating application. It is named as Solution 1A.

A similar procedure is followed to prepare another solution with 20 % neutralization level. The final solution contains 7 wt % polymer solid and 19 wt % isopropanol as a cosolvent. It is named as Solution IB.

A similar procedure is followed to prepare another solution with 5.4 % neutralization level. The final solution contains 7 wt% polymer solid and 53 wt % isopropanol as a cosolvent. It is named as Solution 1C.

### Example 2

### Preparation of neutralized poly(ethylene-acrylic acid) copolymer

Weighed 10 grams of a fully neutralized poly(ethylene-acrylic acid) copolymer solution with 24 wt % solid content. The copolymer contains 80 weight percent ethylene and 20 weight percent acrylic acid neutralized with sodium hydroxide. The degree of neutralization is 85 percent. The composition can be prepared by procedures known in the art, or can be obtained commercially. *See*, *e.g*., U.S. Patent Application No. 2011/0319521; PCT Published Application No. WO2011034883; and PCT Published Application No. WO2012082624. After agitation for 5 minutes, it is ready for the coating application. The final solution is a diluted solution with 2.4 % polymer content and is named as Solution 2.

### Example 3

### Preparation of a detergent with 21% water content

Obtained 100 grams of detergent from the Free and Clear AllMighty Pacs® pouches, which are the product from The Sun Products Corporation, and transfer it to a 200 ml jar with a stir bar. Add 14.26 grams of DI water to the jar and agitate the mixture at room temperature for 10 minutes. The water content in the modified detergent is 21 wt % (by Karl-Fisher titration).

### Example 4

### Coating on the surface of a PVOH film substrate

A PVOH based film thermoplastic film, MonoSol M8630 supplied by MonoSol, a Kuraray Company, was chosen as the coating substrate in the example experiment. The thickness of the MonoSol M8630 film is about 76 microns. A piece of the MonoSol M8630 film was cut to about 15 cm by 25 cm and fixed with tape on the top of a glass substrate. As shown in Table 1, two coating solutions were prepared from the blends of those solutions in Example 1-2. The solutions were coated on the top of the MonoSol M8630 film by a #10 drawdown bar, a product of Paul N. Gardner Company, Inc. The glass substrates with coated PVOH films were placed into an oven at 40 °C with constant nitrogen flow. The coated films were taken out of the oven after 40 minutes. The thickness of the coatings are estimated to be between 0.5-2 microns. The obtained coatings are ready for evaluation.

**Table 1. Coating formulations:**

| Coating# | A | B | C | D | E |
|---|---|---|---|---|---|
| Solution 1A (g) | 2 | | | | |
| Solution 1B (g) | | 5 | | 10 | |
| Solution 1C (g) | | | | | 10 |
| Solution 2 (g) | 8 | 5 | 10 | | |
| Total (g) | 10 | 10 | 10 | 10 | 10 |

The water dispersibility of the coated films was measured by dissolving of a piece of 2cmxlcm film in about 15 ml of DI water. All tested samples, A-E and the M8630 film control are fully soluble after 2 minutes at room temperature with mild agitation. After stretching to 200% elongation, the samples do not show apparent coating delamination and mechanical failure.

### Example 5

### Small pouch preparations with coatings and detergent

For each pouch preparation, two pieces of the coated films were cut to about 3"x2" and a sealing solution of 50% water/50% propylene glycol was applied to three edges of one piece of the film. The film was covered with the other piece of film, coated area to coated area and then the two films sealed together by a pressure of 5000psi for 2 minutes. About 3.0 grams of a detergent were added carefully to the one-end open pocket. The last edge of the open pocket was sealed with the same condition above. The sealed pouch was put into a small zip bag. The zip bag containing the sealed detergent pouch was put into a 38 °C/80% relative humidity (RH) environmental chamber for a 28 day accelerated storage test. The pouch was taken out of the bag after 28 days. Any sign of leaking or pouch damage is considered a failure. The pouch is put into a 500ml beaker with 300ml of tap water and a stir bar. The water dispersibility is checked at 10 minutes with a medium agitation by the stir bar.

Three pouches were made with above procedure. The pouch formulation and the evaluation details are listed in Table 2.

**Table 2.**

| Pouch# | A | Comparative A | Comparative B |
|---|---|---|---|
| Film type | Coating #A | M8630 control | M8630 control |
| Water content in detergent (%) | 21 | 21 | 9 |
| Pouch stability after 28 day | stable | stable | stable |
| Water dispersibility | fully dispersible | not dispersible | fully dispersible |

All pouches, either made from Coating #A or the M8630 control film, were stable after the 28 days accelerated storage test. However, the Comparative A pouch was no longer water dispersible under the test condition, while the Comparative B and Coating #A pouches were still fully dispersible. The results demonstrate that the PVOH control film is only stable at low water content level, but not at high water content level. The inventive film Coating#A can improve the water content resistance.

### Example 6

### 20-gram pouch preparations with coatings and detergent with 21 wt% water

The procedure in Example 5 was followed, except the film was stretched by vacuum to form a large enough pocket for about 20 grams of the detergent. Two 20 gram pouches, one from the M8630 control and one from the Coating#B, were prepared accordingly. Both pouches were stable after the 28-day treatment. The water dispersibility results from Example 6 were similar to those in Example 5. The pouch made with Coating# B remained fully dispersible in 300ml tap water, but the M8630 pouch lost its water dispersibility after the accelerated storage test.

Further tensile testing results illustrated that the coatings of this invention do not decrease the film flexibility and mechanical performances. The inventive films were strong enough to generate detergent pouches. The examples in this document demonstrated that the inventive films can be used in the unit dose detergent packaging with high water content detergents.

## Claims

1. A water dispersible polymer film comprising:
a polyvinyl alcohol substrate; and
a barrier layer coated on at least one surface of the substrate, each barrier layer independently comprising a mixture of (a) a first copolymer that is an at least partially neutralized maleic anhydride-C₂-C₈ olefin copolymer or its maleic acid counterpart; and (b) a second copolymer that is an at least partially neutralized ethylene (meth)acrylic acid copolymer,
wherein the first copolymer is an at least partially neutralized maleic acid-isobutylene copolymer,
and further wherein the weight ratio of the first copolymer to the second copolymer is from 10:1 to 1:4.

2. The polymer film of claim 1 wherein the second copolymer is an at least partially neutralized ethylene acrylic acid copolymer.

3. The polymer film of any one of claims 1-2 wherein the substrate has a thickness ranging from 25 to 500 microns, and each barrier layer independently has a thickness ranging from 0.5 to 25 microns.

4. A detergent packet comprising a detergent formulation encased in the water dispersible polymer film of any one of claims 1-3.

5. The detergent packet of claim 4 wherein the detergent formulation contains at least 20 weight percent of water, based on the total weight of the detergent formulation.

## Patentansprüche

1. Eine wasserdispergierbare Polymerfolie, die Folgendes beinhaltet:
ein Polyvinylalkoholsubstrat; und
eine Barriereschicht, mit der mindestens eine Oberfläche des Substrats beschichtet ist, wobei jede Barriereschicht unabhängig eine Mischung aus (a) einem ersten Copolymer, das ein mindestens teilweise neutralisiertes Maleinsäureanhydrid-C₂-C₈-Olefincopolymer oder sein Maleinsäure-Gegenstück ist; und (b) einem zweiten Copolymer, das ein mindestens teilweise neutralisiertes Ethylen-(Meth)acrylsäureCopolymer ist, beinhaltet,
wobei das erste Copolymer ein mindestens teilweise neutralisiertes Maleinsäure-Isobutylen-Copolymer ist,
und wobei ferner das Gewichtsverhältnis des ersten Copolymers zu dem zweiten Copolymer von 10 : 1 bis 1 : 4 ist.

2. Polymerfolie gemäß Anspruch 1, wobei das zweite Copolymer ein zumindest teilweise neutralisiertes Ethylen-Acrylsäurecopolymer ist.

3. Polymerfolie gemäß einem der Ansprüche 1-2, wobei das Substrat eine Dicke in einem Bereich von 25 bis 500 Mikrometern aufweist und jede Barriereschicht unabhängig eine Dicke in einem Bereich von 0,5 bis 25 Mikrometern aufweist.

4. Eine Waschmittelpackung, die eine Waschmittelformulierung beinhaltet, die in der wasserdispergierbaren Polymerfolie gemäß einem der Ansprüche 1-3 eingeschlossen ist.

5. Waschmittelpackung gemäß Anspruch 4, wobei die Waschmittelformulierung zu mindestens 20 Gewichtsprozent Wasser, bezogen auf das Gesamtgewicht der Waschmittelformulierung, enthält.

## Revendications

1. Un film de polymère hydrodispersable comprenant :
un substrat d'alcool polyvinylique ; et
une couche barrière déposée sur au moins une surface du substrat, chaque couche barrière comprenant indépendamment un mélange (a) d'un premier copolymère qui est un copolymère d'anhydride maléique-oléfine en C₂ à C₈ au moins partiellement neutralisé ou son équivalent d'acide maléique ; et (b) d'un deuxième copolymère qui est un copolymère d'éthylène et d'acide (méth)acrylique au moins partiellement neutralisé, dans lequel le premier copolymère est un copolymère d'acide maléique-isobutylène au moins partiellement neutralisé,
et dans lequel en outre le rapport en poids du premier copolymère au deuxième copolymère va de 10/1 à 1/4.

2. Le film de polymère de la revendication 1 dans lequel le deuxième copolymère est un copolymère d'éthylène et d'acide acrylique au moins partiellement neutralisé.

3. Le film de polymère de l'une quelconque des revendications 1 à 2 dans lequel le substrat a une épaisseur comprise dans l'intervalle allant de 25 à 500 microns, et chaque couche barrière a indépendamment une épaisseur comprise dans l'intervalle allant de 0,5 à 25 microns.

4. Un sachet de détergent comprenant une formulation de détergent enfermée dans le film de polymère hydrodispersable de l'une quelconque des revendications 1 à 3.

5. Le sachet de détergent de la revendication 4 dans lequel la formulation de détergent contient au moins 20 pour cent en poids d'eau, rapporté au poids total de la formulation de détergent.
